# EUROPEAN PATENT APPLICATION

(11) **EP 4 354 361 A1**
(43) Date of publication of application: **17.04.2024**
(21) Application number: 22824037.0
(22) Date of filing: 28.05.2022
(51) Int. Cl.: G06N 20/00

(54) **MODEL TRAINING METHOD AND RELATED SYSTEM, AND STORAGE MEDIUM**

(30) Priority: 15.06.2021 CN 202110662048
(71) Applicant: Huawei Technologies Co., Ltd., Shenzhen, Guangdong 518129 (CN)
(72) Inventor: ZHANG, Qi, Shenzhen, Guangdong 518129 (CN); WU, Tiancheng, Shenzhen, Guangdong 518129 (CN); ZHOU, Peichen, Shenzhen, Guangdong 518129 (CN)
(74) Representative: Körber, Martin Hans
(86) International application number: PCT/CN2022/095802
(87) International publication number: WO 2022/262557

(57) **Abstract**

Embodiments of this application provide a model training method, a related system, and a storage medium, and are applied to the field of artificial intelligence technologies, for example, in the aspect of federated learning. The system includes: A client is configured to train a first model based on unlabeled data, and is further configured to send a parameter of a first subnet in the first model to the server; the server is configured to train a second model based on the parameter of the first subnet and labeled data, to update a parameter of the second model, and the server is further configured to send an updated parameter of the first subnet and an updated parameter of a third subnet to the client; and the client is further configured to obtain a target model based on the parameter of the first subnet and the parameter of the third subnet that are from the server. This method ensures security of private data on the client, improves a feature extraction capability of the model on the unlabeled data, and saves labor costs.

## Description

This application claims priority to Chinese Patent Application No. 202110662048.9, filed with the China National Intellectual Property Administration on June 15, 2021 and entitled "MODEL TRAINING METHOD, RELATED SYSTEM, AND STORAGE MEDIUM", which is incorporated herein by reference in its entirety.

### TECHNICAL FIELD

This application relates to the field of artificial intelligence technologies, and in particular, to a model training method, a related system, and a storage medium.

### BACKGROUND

With the development of artificial intelligence, a concept of "federated learning" is proposed, so that both federated parties can perform model training to obtain model parameters without providing their own data, and data privacy leakage can be avoided.

Horizontal federated learning, also known as feature-aligned federated learning (feature-aligned federated learning), is to perform joint machine learning on data with the same data features but different users on clients when data features of the clients are much overlapped (that is, data features are aligned) but users are less overlapped. Horizontal federated learning applies to two scenarios: a standard scenario and a non-intersecting scenario. In the standard scenario, labeled data participating in model training is stored on the client, that is, standard supervised training is performed on the client. In the non-intersecting scenario, labeled data participating in model training is stored on a server, and a large amount of unlabeled data is stored on the client. In the non-intersecting scenario, many data labeling tasks need to be processed by personnel with relevant professional knowledge. For example, for a mobile phone application software for yoga posture correction, it is difficult for an ordinary person to determine whether a yoga posture of the ordinary person is completely correct. Therefore, even if a user is willing to label all picture data for a service provider, the service provider can only hire a professional yoga practitioner to label related data.

In current horizontal federated learning, for the non-intersecting scenario, it is usually assumed that a large amount of labeled data exists on the client, and it can be ensured that a training mode of horizontal federated learning is used for model training. However, in an actual case, a small amount of or even no labeled data usually exists on the client, and it is actually difficult to require the client to label the data. Therefore, it is difficult to obtain a high-quality model by using the existing training mode of horizontal federated learning.

### SUMMARY

This application discloses a model training method, a related system, and a storage medium, to improve a feature extraction capability of a model on unlabeled data.

According to a first aspect, an embodiment of this application provides a model training system. The model training system includes a server and a client, the server maintains labeled data, and the client maintains unlabeled data. The client is configured to train a first model based on the unlabeled data, to obtain a parameter of the first model; the client is further configured to send a parameter of a first subnet in the first model to the server, where the first model further includes a second subnet; the server is configured to train a second model based on the parameter of the first subnet reported by the client and the labeled data, to update a parameter of the second model, where the second model includes the first subnet and a third subnet, and the third subnet corresponds to the second subnet; the server is further configured to send an updated parameter of the first subnet and an updated parameter of the third subnet to the client; and the client is further configured to obtain a target model based on the parameter of the first subnet and the parameter of the third subnet that are from the server, where the target model includes the first subnet and the third subnet.

According to this solution, the client performs training based on the unlabeled data, and then the server performs training based on the parameter of the first subnet reported by the client and the labeled data, and sends the updated parameter of the first subnet and the updated parameter of the third subnet to the client. Further, the client obtains the target model based on the parameter of the first subnet and the parameter of the third subnet. This method ensures security of private data on the client, improves a feature extraction capability of the model on the unlabeled data, and saves labor costs. In this solution, horizontal federated learning can be performed even when the labeled data exists only on the server and no labeled data exists on the client, to adapt to a real scenario lack of the labeled data.

That the client is configured to train a first model based on the unlabeled data, to obtain a parameter of the first model may be understood as that the client trains the first model based on the unlabeled data, to update the parameter of the first model.

In an optional implementation, the first subnet may be configured to perform feature extraction on data input into the subnet.

Compared with the conventional technology in which the client sends all parameters obtained through training to the server, in this solution, communication overheads in a training process can be reduced to some extent because a small amount of data is transmitted.

In an optional implementation, when sending the parameter of the first model to the server, the client is configured to send only the parameter of the first subnet in the first model to the server.

In another optional implementation, the client is further configured to send a parameter other than the parameter of the first subnet in the first model to the server.

In an optional implementation, a quantity of clients is K, K is an integer greater than 1, and the server is further configured to perform aggregation processing on parameters of K first subnets from the K clients, to obtain a processed parameter of the first subnet; and when training the second model of the server based on the parameter of the first subnet reported by the client and the labeled data, to update the parameter of the second model, the server is configured to train the second model of the server based on the processed parameter of the first subnet and the labeled data, to update the parameter of the second model.

In this method, the server performs training based on parameters of first subnets of a plurality of clients, to effectively improve the feature extraction capability of the model on the unlabeled data.

In an optional implementation, the third subnet of the second model is configured to output a calculation result of the second model, and the second subnet of the first model is configured to output a calculation result of the first model. The third subnet of the second model has a different structure from the second subnet of the first model.

In an optional implementation, the third subnet is a Classifier subnet, the second subnet is an MLM subnet, and the like.

In an optional implementation, a parameter of the second subnet of the first model remains unchanged before and after training.

This method can reduce training overheads.

In an optional implementation, the second model further includes a fourth subnet, and a parameter of the fourth subnet of the second model remains unchanged before and after training.

This method can reduce training overheads.

According to a second aspect, an embodiment of this application provides a model training method, applied to a server. The server maintains labeled data, and the method includes: training a second model based on a parameter of a first subnet reported by a client and the labeled data, to update a parameter of the second model, where the second model includes the first subnet and a third subnet; and sending an updated parameter of the first subnet and an updated parameter of the third subnet to the client.

According to this embodiment of this application, the server performs training based on the parameter of the first subnet reported by the client and the labeled data, and then sends the updated parameter of the first subnet and the updated parameter of the third subnet to the client. The parameter of the first subnet reported by the client is obtained by the client by performing training based on the unlabeled data. This method ensures security of private data on the client, improves a feature extraction capability of the model on the unlabeled data, and saves labor costs. In this solution, horizontal federated learning can be performed even when the labeled data exists only on the server and no labeled data exists on the client, to adapt to a real scenario lack of the labeled data.

In an optional implementation, a quantity of clients is K, K is an integer greater than 1, and the method further includes: performing aggregation processing on parameters of K first subnets from the K clients, to obtain a processed parameter of the first subnet; and the training a second model based on a parameter of a first subnet reported by a client and the labeled data, to update a parameter of the second model includes: training the second model based on the processed parameter of the first subnet and the labeled data, to update the parameter of the second model.

In this method, the server performs training based on parameters of first subnets of a plurality of clients, to effectively improve the feature extraction capability of the model on the unlabeled data.

In an optional implementation, the server further maintains unlabeled data, and the training a second model based on a parameter of a first subnet reported by a client and the labeled data, to update a parameter of the second model includes: training a third model based on the parameter of the first subnet reported by the client and the unlabeled data, to update a parameter of the third model; and training the second model based on the parameter of the third model and the labeled data, to update the parameter of the second model.

This method can implement horizontal federated learning in a scenario in which the server maintains the labeled data and the unlabeled data, and further improves a feature extraction capability of the model and saves labor costs.

According to a third aspect, an embodiment of this application provides a model training method, applied to a client. The client maintains unlabeled data, and the method includes: training a first model based on the unlabeled data, to obtain a parameter of the first model; sending a parameter of a first subnet in the first model to the server, where the first model further includes a second subnet; and obtaining a target model based on the parameter of the first subnet and a parameter of a third subnet that are from the server, where the target model includes the first subnet and the third subnet, and the third subnet corresponds to the second subnet.

According to this embodiment of this application, the client performs training based on the unlabeled data, reports the parameter of the first subnet to the server, and obtains the target model based on the parameter of the first subnet and the parameter of the third subnet that are from the server. The parameter of the first subnet and the parameter of the third subnet that are from the server are obtained by the server through training based on the parameter of the first subnet reported by the client and labeled data. This method ensures security of private data on the client, improves a feature extraction capability of the model on the unlabeled data, and saves labor costs. In this solution, horizontal federated learning can be performed even when the labeled data exists only on the server and no labeled data exists on the client, to adapt to a real scenario lack of the labeled data.

In an optional implementation, the client sends only the parameter of the first subnet in the first model to the server, and does not send a parameter other than the parameter of the first subnet in the first model to the server.

Compared with the conventional technology in which the client sends all parameters obtained through training to the server, in this solution, communication overheads in a training process can be reduced to some extent because a small amount of data is transmitted.

In another optional implementation, the method further includes: sending a parameter other than the parameter of the first subnet in the first model to the server.

In an optional implementation, a loss value used for performing unsupervised training is obtained based on the unlabeled data of the client and first data, the first data is obtained by inputting second data into the first model for processing, and the second data is obtained by performing masking on the unlabeled data.

According to this embodiment of this application, the client performs masking on the unlabeled data when performing unsupervised training, and calculates the loss value based on the unlabeled data of the client and the data obtained through masking. This method can improve a feature extraction capability of the model on the unlabeled data.

According to a fourth aspect, an embodiment of this application provides a model training method, applied to a client. The client maintains unlabeled data and labeled data, and the method includes: training a first model based on the unlabeled data, to obtain a parameter of the first model; training a fourth model based on the parameter of the first model and the labeled data, to obtain a parameter of the fourth model; sending a parameter of a first subnet and a parameter of a second subnet in the fourth model to the server; and updating the fourth model based on the parameter of the first subnet and the parameter of the second subnet that are from the server.

This method can implement horizontal federated learning in a scenario in which the client maintains the labeled data and the unlabeled data, and further improves a feature extraction capability of the model and saves labor costs.

In an optional implementation, the client sends only the parameter of the first subnet and the parameter of the second subnet in the fourth model to the server, and does not send a parameter other than the parameter of the first subnet and the parameter of the second subnet in the fourth model to the server.

In another optional implementation, the method further includes: sending a parameter other than the parameter of the first subnet and the parameter of the second subnet in the fourth model to the server.

According to a fifth aspect, an embodiment of this application provides a model training apparatus. The apparatus includes: a training module, configured to train a second model based on a parameter of a first subnet reported by a client and labeled data, to update a parameter of the second model, where the second model includes the first subnet and a third subnet; and a sending module, configured to send an updated parameter of the first subnet and an updated parameter of the third subnet to the client.

In an optional implementation, a quantity of clients is K, and K is an integer greater than 1. The apparatus further includes a processing module, configured to: perform aggregation processing on parameters of K first subnets from the K clients, to obtain a processed parameter of the first subnet. The training module is further configured to: train the second model based on the processed parameter of the first subnet and the labeled data, to update the parameter of the second model.

In an optional implementation, the training module is further configured to: train a third model based on the parameter of the first subnet reported by the client and unlabeled data, to update a parameter of the third model; and train the second model based on the parameter of the third model and the labeled data, to update the parameter of the second model.

According to a sixth aspect, an embodiment of this application provides a model training apparatus. The apparatus includes: a training module, configured to train a first model based on unlabeled data, to obtain a parameter of the first model; a sending module, configured to send a parameter of a first subnet in the first model to the server, where the first model further includes a second subnet; and an updating module, configured to obtain a target model based on the parameter of the first subnet and a parameter of a third subnet that are from the server, where the target model includes the first subnet and the third subnet, and the third subnet corresponds to the second subnet.

In an optional implementation, the sending module is further configured to send a parameter other than the parameter of the first subnet in the first model to the server.

In another optional implementation, the sending module is configured to send only the parameter of the first subnet in the first model to the server, and does not send a parameter other than the parameter of the first subnet in the first model to the server.

According to a seventh aspect, an embodiment of this application provides a model training apparatus. The apparatus includes: a training module, configured to train a first model based on unlabeled data, to obtain a parameter of the first model, and train a fourth model based on the parameter of the first model and labeled data, to obtain a parameter of the fourth model; a sending module, configured to send a parameter of a first subnet and a parameter of a second subnet in the fourth model to the server; and an updating module, configured to update the fourth model based on the parameter of the first subnet and the parameter of the second subnet that are from the server.

In an optional implementation, the sending module is further configured to send a parameter other than the parameter of the first subnet and the parameter of the second subnet in the fourth model to the server.

In another optional implementation, the sending module is configured to send only the parameter of the first subnet and the parameter of the second subnet in the fourth model to the server, and does not send a parameter other than the parameter of the first subnet and the parameter of the second subnet in the fourth model to the server.

According to an eighth aspect, an embodiment of this application provides a model training apparatus, including a processor and a memory. The memory is configured to store program code, and the processor is configured to invoke the program code to perform the method.

According to a ninth aspect, this application provides a computer storage medium, including computer instructions. When the computer instructions are run on an electronic device, the electronic device is enabled to perform the method according to any one of the possible implementations of the second aspect and/or any one of the possible implementations of the third aspect and/or any one of the possible implementations of the fourth aspect.

According to a tenth aspect, an embodiment of this application provides a computer program product. When the computer program product runs on a computer, the computer is enabled to perform the method according to any one of the possible implementations of the second aspect and/or any one of the possible implementations of the third aspect and/or any one of the possible implementations of the fourth aspect.

It may be understood that the model training system according to the first aspect, the model training apparatus according to the fifth aspect, the model training apparatus according to the sixth aspect, the model training apparatus according to the seventh aspect, the model training apparatus according to the eighth aspect, the computer storage medium according to the ninth aspect, or the computer program product according to the tenth aspect are all configured to perform the method according to any one of the possible implementations of the second aspect and/or any one of the possible implementations of the third aspect and/or any one of the possible implementations of the fourth aspect. Therefore, for beneficial effects that can be achieved by the method, refer to beneficial effects in the corresponding method. Details are not described herein again.

### BRIEF DESCRIPTION OF DRAWINGS

The following describes accompanying drawings used in embodiments of this application.
FIG. 1a is a schematic diagram of a framework of a model training system according to an embodiment of this application;
FIG. 1b is a schematic diagram of a framework of another model training system according to an embodiment of this application;
FIG. 2 is a schematic diagram of interaction in a model training method according to an embodiment of this application;
FIG. 3 is a schematic flowchart of a model training method according to an embodiment of this application;
FIG. 4a is a schematic flowchart of a model training method for a server according to an embodiment of this application;
FIG. 4b is a schematic diagram of a model training method according to an embodiment of this application;
FIG. 5a is a schematic flowchart of a model training method for a client according to an embodiment of this application;
FIG. 5b is a schematic diagram of a model training method according to an embodiment of this application;
FIG. 6 is a schematic flowchart of another model training method according to an embodiment of this application;
FIG. 7 is a schematic diagram of a structure of a model training apparatus according to an embodiment of this application;
FIG. 8a is a schematic diagram of a structure of a model training system according to an embodiment of this application;
FIG. 8b is a schematic diagram of a structure of a model training apparatus according to an embodiment of this application;
FIG. 8c is a schematic diagram of a structure of a model training apparatus according to an embodiment of this application; and
FIG. 8d is a schematic diagram of a structure of a model training apparatus according to an embodiment of this application.

### DESCRIPTION OF EMBODIMENTS

The following describes embodiments of this application with reference to the accompanying drawings in embodiments of this application. Terms used in implementations of embodiments of this application are merely used to explain specific embodiments of this application, and are not intended to limit this application.

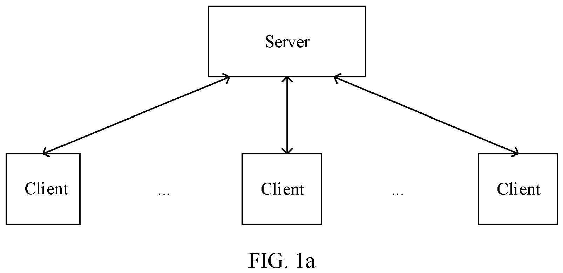

FIG. 1a is a schematic diagram of a framework of a model training system according to an embodiment of this application. The system includes a server and a client. The client maintains unlabeled data, and the server maintains labeled data. The client trains a first model based on the unlabeled data, to obtain a parameter of the first model. Then, the client sends a parameter of a first subnet in the first model to the server. The server trains a second model based on the parameter of the first subnet reported by the client and the labeled data, to update a parameter of the second model. The server sends an updated parameter of the first subnet and an updated parameter of a third subnet to the client, and further the client obtains a target model based on the parameter of the first subnet and the parameter of the third subnet that are from the server.

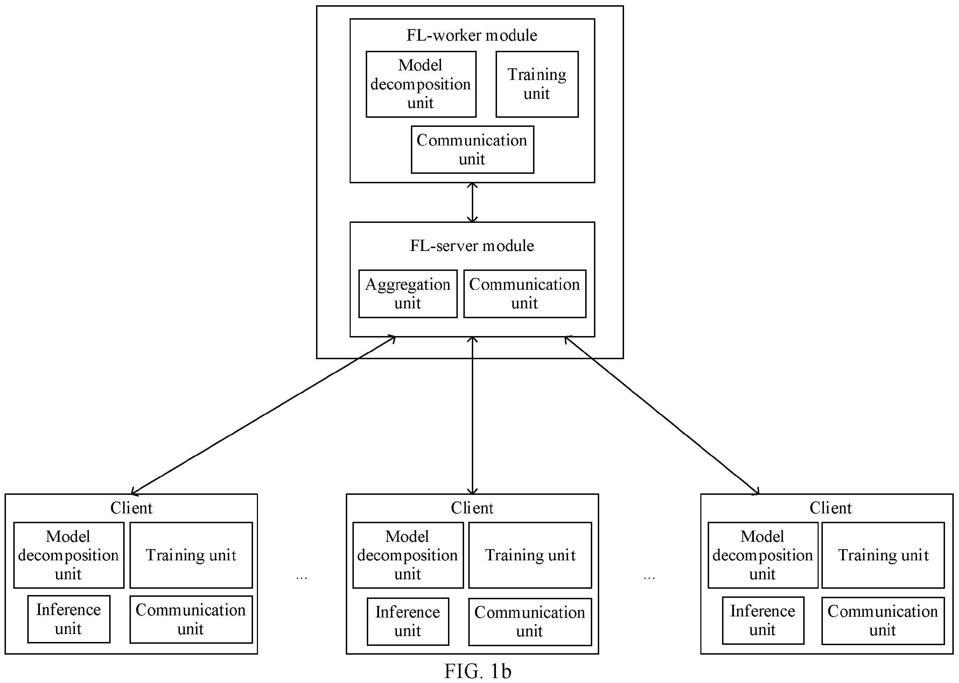

FIG. 1b is a schematic diagram of a framework of another model training system according to an embodiment of this application. The system includes a server and a client. The server includes a federated learning server (Federated Learning Server, FL-Server) module and a federated learning worker (Federated Learning Worker, FL-Worker) module. The FL-server module includes an aggregation unit and a communication unit. The FL-server module is configured to process data. The FL-worker module includes a model decomposition unit, a training unit, and a communication unit. The FL-worker module is configured to train a model. The client includes a model decomposition unit, a training unit, an inference unit, and a communication unit. The client is configured to perform model training and inference.

The model decomposition unit of the client is configured to decompose a model of the client into a plurality of subnets. The training unit of the client trains a decomposed model based on unlabeled data, and then the communication unit of the client sends a parameter of a first subnet obtained through training to the FL-server module.

The aggregation unit of the FL-server module performs aggregation processing on received parameters of first subnets sent by a plurality of clients, and then sends processed parameters of the first subnet to the FL-worker module. The model decomposition unit of the FL-worker module is configured to decompose a model of the server into a plurality of subnets. The training unit of the FL-worker module trains a decomposed model based on the processed parameter of the first subnet and the labeled data, to obtain an updated parameter of the first subnet and an updated parameter of the third subnet, and then sends the updated parameter of the first subnet and the updated parameter of the third subnet to the FL-server module. The FL-server module delivers the updated parameter of the first subnet and the updated parameter of the third subnet to each client, and the client obtains a target model based on the parameter of the first subnet and the parameter of the third subnet that are from the server. Further, the inference unit of the client may perform inference based on the target model.

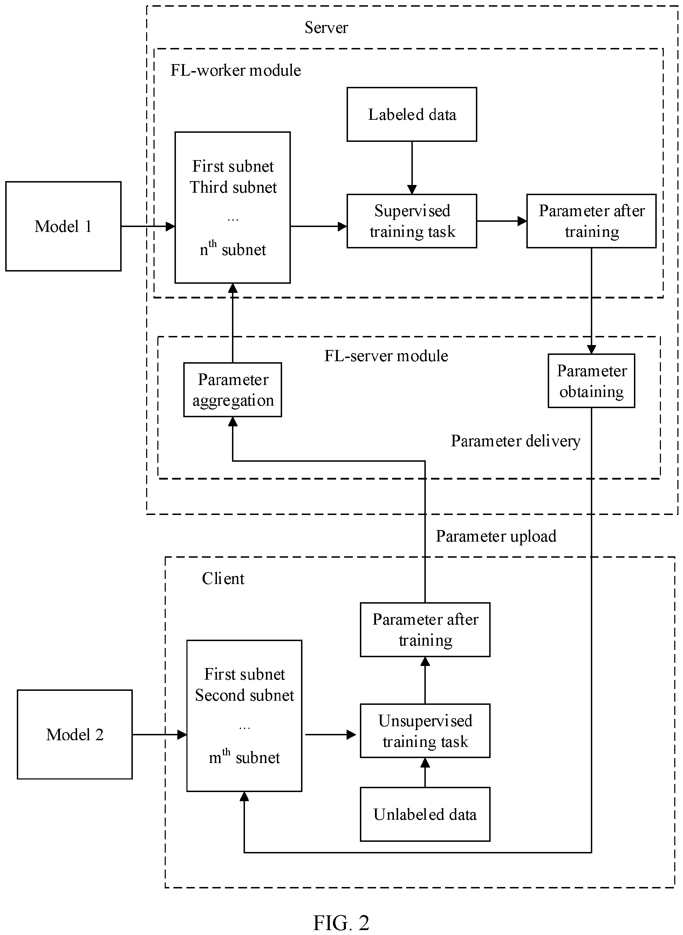

FIG. 2 is a schematic flowchart of a model training method according to an embodiment of this application. The method is applied to a non-intersecting scenario of horizontal federated learning. A server maintains labeled data, and the server performs supervised training. A client maintains unlabeled data, and the client performs unsupervised training.

After model parameters are initialized, unsupervised training of the client is started first. Then, unsupervised training of the client and supervised training of the server are alternately performed. The alternate procedure stops training after a preset condition is met. The preset condition may be that a quantity of iterations is met, or a loss value is less than a preset value. This is not specifically limited in this solution.

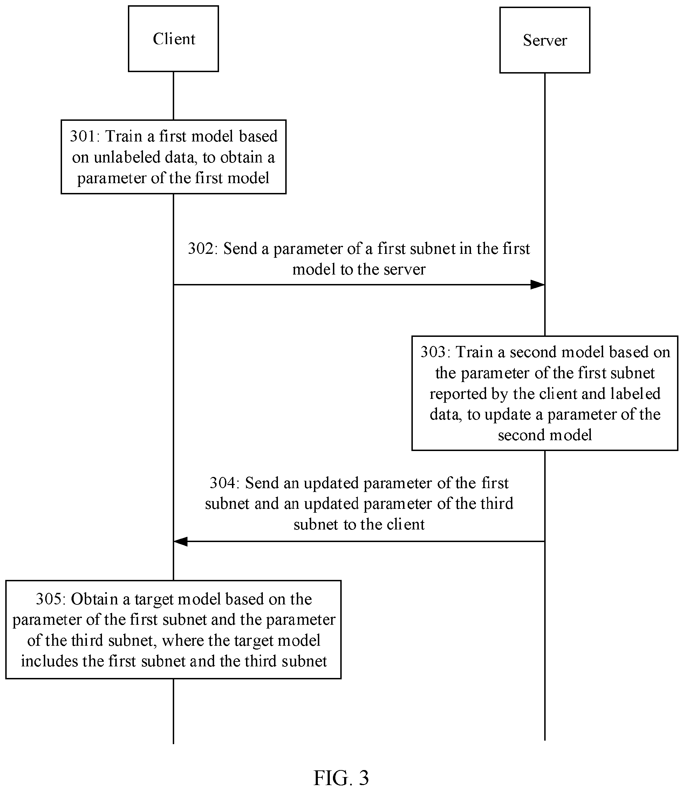

Specifically, FIG. 3 is a schematic flowchart of a model training method according to an embodiment of this application. The method is applied to a model training system, and the model training system includes a server and a client. The method includes steps 301 to 305, which are specifically as follows:
301: The client trains a first model based on unlabeled data, to obtain a parameter of the first model.

The first model may be any model, for example, a neural network model, a support vector machine model, or a decision tree model. The first model may correspond to a model 2 in FIG. 2.

The training the first model may be performing unsupervised training.

In an optional implementation, a loss value used for performing unsupervised training is obtained based on the unlabeled data of the client and first data, the first data is obtained by inputting second data into the first model for processing, and the second data is obtained by performing masking on the unlabeled data.

Specifically, unsupervised training may include the following steps.

First, a masking operation is performed on the unlabeled data.

The masking operation is a replacement operation performed on some values in an original data feature, and the replaced value may be a specific value or a learnable parameter.

For example, the unlabeled data is short message data [specially, selected, into, port, high, science, technology, facial, mask], the masking operation is performed on "into" in the short message data, and data obtained by performing the masking operation is [specially, selected, MASK, port, high, science, technology, facial, mask], and the like.

Then, the masked data is input into a model used for unsupervised training, to obtain an output result of the model.

A similarity function (that is, a loss function) is used to compare a similarity between the output result of the model and the foregoing unlabeled data.

A comparison result is input to an optimizer to update the model parameter.

The foregoing steps are repeatedly performed, and until a stop condition of unsupervised training is met, training is stopped.

The foregoing is merely an example of unsupervised training, and unsupervised training may alternatively be unsupervised training in another form. This is not specifically limited in this solution.

The training the first model to obtain the parameter of the first model may be understood as training the first model to update the parameter of the first model.

302: The client sends a parameter of a first subnet in the first model to the server. The first model further includes a second subnet.

During model initialization, the client may perform a decomposition operation on the first model, to separately decompose parameters of subnets of the first model, to perform model training.

The first model includes a plurality of subnets, and the plurality of subnets include the first subnet and the second subnet.

The first subnet may be a subnet configured to perform feature extraction. The second subnet may be a subnet configured to output a calculation result of the first model.

For example, the first model may include an embedding Embedding subnet, a lightweight bidirectional encoding representation ALBERT subnet from a deformer, a masked language model (Masked Language Model, MLM) subnet, an adaptive moment estimation Adam optimizer subnet, and the like. Correspondingly, the first subnet is an ALBERT subnet, and the second subnet is an MLM subnet.

The subnet may be understood as a submodel. For example, the subnet may be an Embedding submodel, an ALBERT submodel, and an MLM submodel.

The first model is merely an example, and may alternatively be a model including another subnet. This is not specifically limited in this solution.

In an optional implementation, the client sends a parameter other than the parameter of the first subnet in the first model to the server.

That is, the client sends the parameter of the first subnet in the first model to the server, and also sends a parameter other than the parameter of the first subnet. For example, a parameter of the second subnet is further sent, or a parameter of another subnet is further sent, or parameters of all other subnets may be further sent to the server. This is not specifically limited in this solution.

In another optional implementation, the client sends only the parameter of the first subnet in the first model to the server.

That is, the client does not send a parameter other than the parameter of the first subnet to the server. Compared with the conventional technology in which the client transmits all parameters obtained through training to the server, in this solution, communication overheads in a training process can be reduced because a small amount of data is transmitted.

303: The server trains a second model based on the parameter of the first subnet reported by the client and the labeled data, to update a parameter of the second model. The second model includes the first subnet and a third subnet, and the third subnet corresponds to the second subnet.

The second model may be any model, for example, a neural network model, a support vector machine model, or a decision tree model. The second model may correspond to a model 1 in FIG. 2.

That the server trains a second model based on the parameter of the first subnet reported by the client and the labeled data, to update a parameter of the second model may be that the server replaces the parameter of the first subnet in the second model based on the parameter of the first subnet reported by the client, to update the parameter of the second model; and then trains the updated second model based on the labeled data, to update the parameter of the second model again.

The training the second model may be performing supervised training on the second model.

In an optional implementation, for training of the server, refer to the following operations:
inputting the labeled data into the second model used for supervised training, to obtain an output result of the second model;
comparing a similarity between the output result of the model and the labeled data by using a similarity function (that is, a loss function); and
inputting a comparison result to an optimizer to obtain the parameter used for model updating.

If the optimizer has a parameter, the parameter of the optimizer may alternatively be used for updating.

The foregoing steps are repeatedly performed, and until a stop condition of supervised training is met, performing is stopped. An updated parameter of the second model of the server is obtained.

The stop condition may be that a preset quantity of iterations is met, or a loss value meets a preset requirement. This is not specifically limited in this solution.

In an optional implementation, when a quantity of clients is K, and K is an integer greater than 1, before step 303, the method further includes:
The server performs aggregation processing on parameters of K first subnets from the K clients, to obtain a processed parameter of the first subnet.

Aggregation processing may be performing, based on a preset weight, weighted summation on parameters of the first subnets sent by the clients, to obtain the processed parameter of the first subnet.

The foregoing manner is merely an example. Certainly, processing may be performed in another form. This is not specifically limited in this solution.

Correspondingly, that the server trains a second model of the server based on the parameter of the first subnet reported by the client and the labeled data, to update a parameter of the second model includes:
The server trains the second model of the server based on the processed parameter of the first subnet and the labeled data, to update the parameter of the second model.

Specifically, the server replaces the parameter of the first subnet in the second model of the server based on the processed parameter of the first subnet, to update the parameter of the second model.

The server trains the updated second model based on the labeled data, to update the parameter of the second model again.

During model initialization, the server may perform a decomposition operation on the second model, to separately decompose parameters of subnets of the second model.

The second model includes a plurality of subnets, and the plurality of subnets include the first subnet and the third subnet.

The first subnet may be a subnet configured to perform feature extraction. The third subnet may be a subnet configured to output a calculation result of the second model.

For example, the second model may include an embedding Embedding subnet, a lightweight bidirectional encoding representation ALBERT subnet from a deformer, a classifier Classifier subnet, an Adam optimizer subnet, and the like. Correspondingly, the third subnet is a Classifier subnet.

The subnet may be understood as a submodel. For example, the subnet may be an Embedding submodel, an ALBERT submodel, and a Classifier submodel.

The second model is merely an example, and may alternatively be a model including another subnet. This is not specifically limited in this solution.

That the third subnet of the second model corresponds to the second subnet of the first model may be understood as that functions of the two are the same. For example, the third subnet of the second model is configured to output the calculation result of the second model, and the second subnet of the first model is configured to output the calculation result of the first model.

The third subnet of the second model has a different structure from the second subnet of the first model.

In an optional implementation, the third subnet is a Classifier subnet, the second subnet is an MLM subnet, and the like.

304: The server sends an updated parameter of the first subnet and an updated parameter of the third subnet to the client.

In an optional implementation, before step 304, the method may further include the following steps.

304-1: Determine whether a preset condition is met.

304-2: If the preset condition is met, perform step 304.

304-3: If the preset condition is not met, the server sends the updated parameter of the first subnet and the updated parameter of the third subnet to the client, and the client updates the first model based on the parameter of the first subnet from the server, and repeatedly performs steps 301, 302, 303, 304-1, and 304-3 until the preset condition is met.

The foregoing preset condition may be a quantity of times of repeatedly performing steps 301, 302, 303, 304-1, and 304-3. The client and the server may determine a quantity of stop times in advance, and when the quantity of repetition times is reached, training is stopped.

The foregoing preset condition may alternatively be that the loss value obtained by the server through calculation based on the loss function is less than a preset value, or the like. This is not specifically limited in this solution.

In another optional implementation, if the preset condition is not met, the server sends only the updated parameter of the first subnet to the client, and the client updates the first model based on the parameter of the first subnet from the server, and repeatedly performs steps 301, 302, 303, 304-1, and 304-3 until the preset condition is met.

305: The client obtains a target model based on the parameter of the first subnet and the parameter of the third subnet that are from the server. The target model includes the first subnet and the third subnet.

The target model may be used for inference.

According to this solution, the client performs training based on the unlabeled data, and then the server performs training based on the parameter of the first subnet reported by the client and the labeled data, and sends the updated parameter of the first subnet and the updated parameter of the third subnet to the client. Further, the client obtains the target model based on the updated parameter of the first subnet and the updated parameter of the third subnet. This method ensures security of private data on the client, improves a feature extraction capability of the model on the unlabeled data, and saves labor costs. In this solution, horizontal federated learning can be performed even when the labeled data exists only on the server and no labeled data exists on the client, to adapt to a real scenario lack of the labeled data.

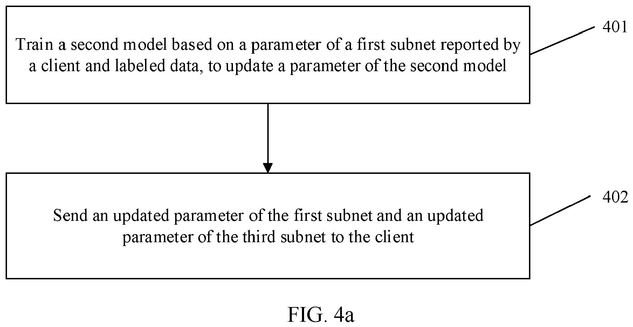

FIG. 4a is a schematic flowchart of a model training method according to an embodiment of this application. The method is applied to a server, and the server maintains labeled data. The method includes steps 401 and 402, which are specifically as follows:
401: Train a second model based on a parameter of a first subnet reported by a client and the labeled data, to update a parameter of the second model. The second model includes the first subnet and a third subnet.

During model initialization, the server may perform a decomposition operation on the second model, to separately decompose parameters of subnets of the second model.

The second model includes a plurality of subnets, and the plurality of subnets include the first subnet and the third subnet.

The first subnet may be a subnet configured to perform feature extraction. The third subnet may be a subnet configured to output a calculation result of the second model.

For example, the second model may include an embedding Embedding subnet, a lightweight bidirectional encoding representation ALBERT subnet from a deformer, a classifier Classifier subnet, an Adam optimizer subnet, and the like. Correspondingly, the third subnet is a Classifier subnet.

The second model is merely an example, and may alternatively be a model including another subnet. This is not specifically limited in this solution.

In an optional implementation, a quantity of clients is K, K is an integer greater than 1, and the method further includes:
performing aggregation processing on parameters of K first subnets from the K clients, to obtain a processed parameter of the first subnet.

Aggregation processing may be performing, based on a preset weight, weighted summation on parameters of the first subnets sent by the clients, to obtain the processed parameter of the first subnet.

The foregoing manner is merely an example. Certainly, processing may be performed in another form. This is not specifically limited in this solution.

Correspondingly, that the server trains a second model of the server based on the parameter of the first subnet reported by the client and the labeled data, to update a parameter of the second model includes:
The server trains the second model of the server based on the processed parameter of the first subnet and the labeled data, to update the parameter of the second model.

Specifically, the server replaces the parameter of the first subnet in the second model of the server based on the processed parameter of the first subnet, to update the parameter of the second model.

The server trains the updated second model based on the labeled data, to update the parameter of the second model again.

In an optional implementation, the server may perform supervised training on the second model.

An output of the second model is obtained by inputting the labeled data into the second model used for supervised training. A similarity function (that is, a loss function) is used to compare a similarity between the output of the model and the labeled data. A comparison result is input to an optimizer to obtain the parameter used for model updating. If the optimizer has a parameter, the parameter of the optimizer may alternatively be used for updating.

The foregoing steps are repeatedly performed, and until a stop condition of supervised training is met, performing is stopped. An updated parameter of the second model of the server is obtained.

The stop condition of supervised training may be that a preset quantity of iterations is met, or a loss value meets a preset requirement. This is not specifically limited in this solution.

In another optional implementation, the server further maintains unlabeled data. That is, the server may perform semi-supervised training.

Correspondingly, the training a second model based on a parameter of a first subnet reported by a client and the labeled data, to update a parameter of the second model includes:
training a third model based on the parameter of the first subnet reported by the client and the unlabeled data, to update a parameter of the third model; and
training the second model based on the parameter of the third model and the labeled data, to update the parameter of the second model.

A third model is trained based on the parameter of the first subnet reported by the client and the unlabeled data, to update a parameter of the third model; and the second model is trained based on the parameter of the third model and the labeled data, to update the parameter of the second model. When the stop condition of semi-supervised training of the server is met, step 402 is performed.

If the foregoing stop condition of semi-supervised training is not met, the parameter of the third model is updated based on the parameter of the second model, the updated third model is trained based on the unlabeled data, to update the parameter of the third model again. The foregoing steps are repeatedly performed until the stop condition of semi-supervised training is met.

The stop condition of semi-supervised training may be that a preset quantity of iterations is met, or a loss value meets a preset requirement. This is not specifically limited in this solution.

In an optional implementation, the second model further includes a fourth subnet, and a parameter of the fourth subnet remains unchanged before and after training.

For example, the fourth subnet may be an Embedding subnet.

That is, the parameter of the fourth subnet of the second model is delivered during initialization, and the parameter remains unchanged in a training process.

This method reduces training overheads.

In this process, if only the unlabeled data exists on the client, the client may perform unsupervised training; or if the labeled data also exists on the client, the client may perform semi-supervised training. This is not specifically limited in this solution.

402: Send an updated parameter of the first subnet and an updated parameter of the third subnet to the client.

Step 402 is performed, so that the client obtains the target model and performs inference.

In an optional implementation, before step 402, the method further includes the following steps.

402-1: Determine whether a preset condition is met.

402-2: If the preset condition is met, perform step 402.

402-3: If the preset condition is not met, the server sends the updated parameter of the first subnet and the updated parameter of the third subnet to the client, so that the client updates the first model based on the parameter of the first subnet from the server, and repeatedly performs steps 401, 402-1, and 402-3 until the preset condition is met.

The foregoing preset condition may be a quantity of times of repeatedly performing step 401, 402-1, and 402-3. The client and the server may determine a quantity of stop times in advance, and when the quantity of repetition times is reached, training is stopped.

The foregoing preset condition may alternatively be that the loss value obtained by the server through calculation based on the loss function is less than a preset value, or the like. This is not specifically limited in this solution.

In another optional implementation, if the preset condition is not met, the server sends only the updated parameter of the first subnet to the client, and repeatedly performs steps 401, 402-1, and 402-3 until the preset condition is met.

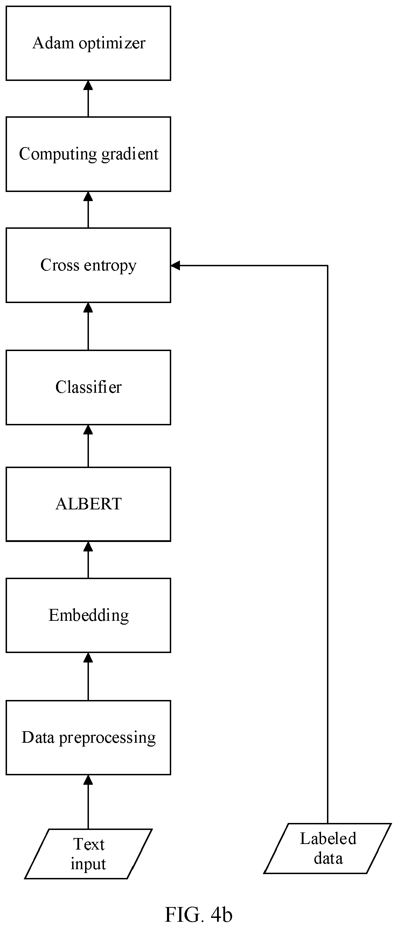

FIG. 4b is a model training method according to an embodiment of this application. The model of the server includes an Embedding subnet, an ALBERT subnet, a Classifier subnet, and an optimizer subnet. This embodiment is described by using a short message classification service as an example.

In supervised training of the server, the server first performs data preprocessing on a short message text. Data preprocessing herein may be a word segmentation operation based on a word analyzer. The server inputs an output result of the word analyzer into a second model. In addition, the server inputs labeled data into a cross-entropy function, and then obtains a similarity through calculation based on the output of the second model. Then, the similarity is input into an optimizer, to update a parameter of the second model.

If a stop condition is not met, the server sends an updated parameter of the ALBERT subnet and an updated parameter of the Classifier subnet to a client. Then, training is performed again based on the parameter of the ALBERT subnet sent by the client. Until the stop condition is met, the server sends the updated parameter of the ALBERT subnet and the updated parameter of the Classifier subnet to the client, so that the client performs inference.

Currently, the server does not have a training engine. Therefore, during training, a model training simulation platform needs to be set up for model training. However, for example, in a real scenario in which a mobile phone interacts with the server, deployment cannot be implemented by using the method.

Based on this, an embodiment of this application further provides a server. The server includes a federated learning server FL-server module and a federated learning worker FL-worker module. Refer to FIG. 2. The federated learning server FL-server module is configured to perform aggregation processing on parameters of K first subnets sent by K clients, and then send processed parameters to the federated learning worker FL-worker module. The FL-worker module is configured to: perform training based on the processed parameter and the labeled data of the server, to obtain an updated parameter of the first subnet and an updated parameter of the third subnet, and then send the updated parameter of the first subnet and the updated parameter of the third subnet to the FL-server module.

The federated learning worker FL-worker module is added to the server by using the foregoing method, so that a training task can be performed on the server. In this way, the server can directly perform model training, and model training efficiency is improved.

According to this embodiment of this application, the server performs training based on the parameter of the first subnet reported by the client and the labeled data, and then sends the updated parameter of the first subnet and the updated parameter of the third subnet to the client. The parameter of the first subnet reported by the client is obtained by the client by performing training based on unlabeled data. This method ensures security of private data on the client, improves a feature extraction capability of the model on the unlabeled data, and saves labor costs. In this solution, horizontal federated learning can be performed even when the labeled data exists only on the server and no labeled data exists on the client, to adapt to a real scenario lack of the labeled data.

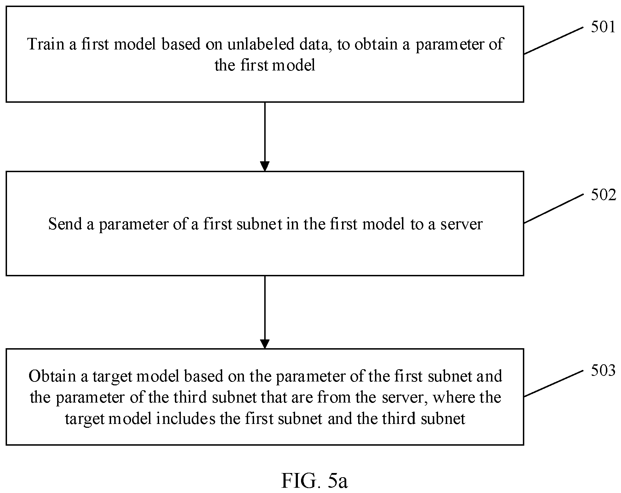

FIG. 5a is a schematic flowchart of a model training method according to an embodiment of this application. The method is applied to a client, and the client maintains unlabeled data. The method includes steps 501 to 503, which are specifically as follows:
501: Train a first model based on the unlabeled data, to obtain a parameter of the first model.

The first model may be any model, for example, a neural network model, a support vector machine model, or a decision tree model.

The training the first model may be performing unsupervised training.

In an optional implementation, a loss value used for performing unsupervised training is obtained based on the unlabeled data of the client and first data, the first data is obtained by inputting second data into the first model for processing, and the second data is obtained by performing masking on the unlabeled data.

Specifically, unsupervised training may include the following steps.

First, a masking operation is performed on the unlabeled data. The masking operation is a replacement operation performed on some values in an original data feature, and the replaced value may be a specific value or a learnable parameter.

For example, the unlabeled data is short message data [specially, selected, into, port, high, science, technology, facial, mask], the masking operation is performed on "into" in the short message data, and data obtained by performing the masking operation is [specially, selected, MASK, port, high, science, technology, facial, mask].

Then, the masked data is input into a model used for unsupervised training, to obtain an output of the model.

A similarity function (that is, a loss function) is used to compare a similarity between the output of the model and the foregoing unlabeled data.

A comparison result is input to an optimizer to update the model parameter.

The foregoing steps are repeatedly performed, and until a stop condition of unsupervised training is met, training is stopped.

The foregoing is merely an example of unsupervised training, and unsupervised training may alternatively be unsupervised training in another form. This is not specifically limited in this solution.

The foregoing obtaining the parameter of the first model may be understood as training the first model to update the parameter of the first model.

502: Send a parameter of a first subnet in the first model to a server. The first model further includes a second subnet.

During model initialization, the client may perform a decomposition operation on the first model, to separately decompose parameters of subnets of the first model.

The first model includes a plurality of subnets, and the plurality of subnets include the first subnet and the second subnet.

The first subnet may be a subnet configured to perform feature extraction. The second subnet may be a subnet configured to output a calculation result of the first model.

For example, the first model may include an embedding Embedding subnet, a lightweight bidirectional encoding representation ALBERT subnet from a deformer, a masked language model (Masked Language Model, MLM) subnet, an adaptive moment estimation Adam optimizer subnet, and the like. Correspondingly, the first subnet is an ALBERT subnet, and the second subnet is an MLM subnet.

The subnet may be understood as a submodel. For example, the subnet may be an Embedding submodel, an ALBERT submodel, and an MLM submodel.

The first model is merely an example, and may alternatively be a model including another subnet. This is not specifically limited in this solution.

In an optional implementation, the client sends a parameter other than the parameter of the first subnet in the first model to the server.

That is, the client sends the parameter of the first subnet in the first model to the server, and also sends a parameter other than the parameter of the first subnet. For example, a parameter of the second subnet is further sent, or a parameter of another subnet is further sent, or parameters of all other subnets may be further sent to the server. This is not specifically limited in this solution.

In another optional implementation, the client sends only the parameter of the first subnet in the first model to the server.

That is, the client does not send a parameter other than the parameter of the first subnet to the server. Compared with the conventional technology in which all parameters obtained through training are transmitted to the server, in this solution, communication overheads in a training process can be reduced because a small amount of data is transmitted.

503: Obtain a target model based on the parameter of the first subnet and a parameter of a third subnet that are from the server. The target model includes the first subnet and the third subnet, and the third subnet corresponds to the second subnet.

The target model may be used for inference.

In an optional implementation, before step 503, the method may further include the following steps.

503-1: Determine whether a preset condition is met.

503-2: If the preset condition is met, perform step 503.

503-3: If the preset condition is not met, update the first model based on the parameter of the first subnet from the server, and repeatedly perform steps 501, 502, 503-1, and 503-3 until the preset condition is met.

The foregoing preset condition may be a quantity of times of repeatedly performing step 501, 502, 503-1, and 503-3. The client and the server may determine a quantity of stop times in advance, and when the quantity of repetition times is reached, training is stopped.

The foregoing preset condition may alternatively be that the loss value obtained by the client through calculation based on the loss function is less than a preset value, or the like. This is not specifically limited in this solution.

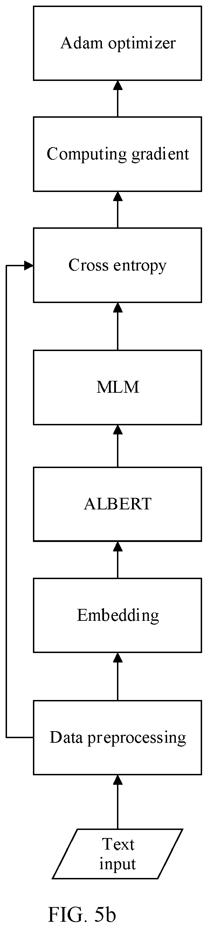

FIG. 5b is a model training method according to an embodiment of this application. A model of a client includes an Embedding subnet, an ALBERT subnet, an MLM subnet, and an optimizer subnet. This embodiment is described by using a short message classification service as an example.

As shown in FIG. 5b, in an unsupervised training task of the client, the client first performs data preprocessing on a short message text. Data preprocessing includes performing word segmentation and then performing masking. A result obtained by masking is used as an input of the model. The client further inputs a result obtained by word segmentation processing into a cross-entropy function, to calculate a similarity with an output of the model. Then, the similarity obtained through calculation is input into the optimizer subnet, to obtain an updated parameter of the first model. Then, the client sends a parameter of the ALBERT subnet to a server.

In this process, if only labeled data exists on the server, the server performs supervised training; or if unlabeled data also exists on the server, the server performs semi-supervised training. This is not specifically limited in this solution.

In an optional implementation, the first model further includes a fifth subnet, and a parameter of the fifth subnet remains unchanged before and after training. For example, the fifth subnet may be an Embedding subnet.

That is, the parameter of the fifth subnet of the first model is delivered during initialization, and the parameter remains unchanged in a subsequent training process.

In this method, the parameter of the fifth subnet remains unchanged in the training process, and training overheads are reduced.

In another optional implementation, a parameter of a second subnet of the first model remains unchanged before and after training. For example, the second subnet may be an MLM subnet.

That is, the parameter of the second subnet of the first model is delivered during initialization, and the parameter remains unchanged in a subsequent training process. This method reduces training overheads.

According to this embodiment of this application, the client performs training based on the unlabeled data, reports the parameter of the first subnet to the server, and obtains a target model based on the parameter of the first subnet and the parameter of the third subnet that are from the server. The parameter of the first subnet and the parameter of the third subnet that are from the server are obtained by the server through training based on the parameter of the first subnet reported by the client and the labeled data. This method ensures security of private data on the client, improves a feature extraction capability of the model on the unlabeled data, and saves labor costs. In this solution, horizontal federated learning can be performed even when the labeled data exists only on the server and no labeled data exists on the client, to adapt to a real scenario lack of the labeled data.

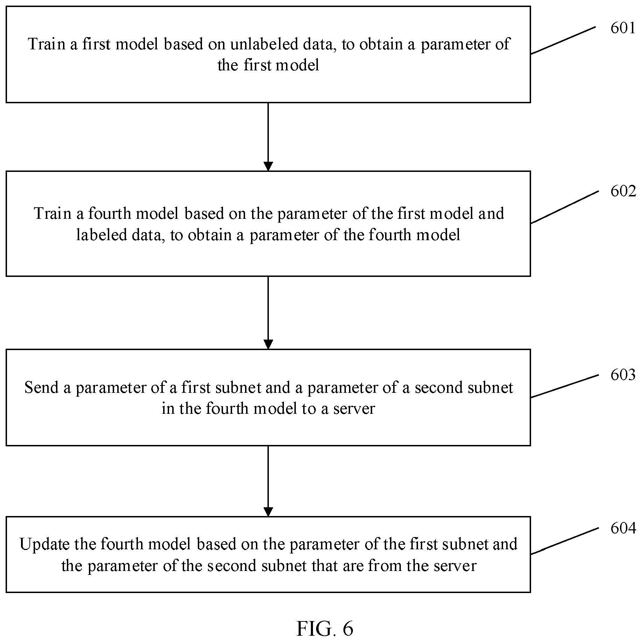

The foregoing embodiment is described by using an example in which the client performs unsupervised training. When the client maintains the labeled data and the unlabeled data, the client may perform semi-supervised training. The following describes semi-supervised training performed by the client. As shown in FIG. 6, an embodiment of this application further provides a model training method, including steps 601 to 604, which are specifically as follows:
601: Train a first model based on the unlabeled data, to obtain a parameter of the first model.

In an optional implementation, unsupervised training is performed on the first model, a loss value used for performing unsupervised training is obtained based on the unlabeled data of the client and first data, the first data is obtained by inputting second data into the first model for processing, and the second data is obtained by performing masking on the unlabeled data.

Specifically, unsupervised training may include the following steps.

First, a masking operation is performed on the unlabeled data.

The masking operation is a replacement operation performed on some values in an original data feature and the replaced value may be a specific value or a learnable parameter.

Then, the masked data is input into a model used for unsupervised training, to obtain an output of the model.

A similarity function (that is, a loss function) is used to compare a similarity between the output of the model and the foregoing unlabeled data.

A comparison result is input to an optimizer to update the model parameter.

The foregoing steps are repeatedly performed, and until a stop condition of unsupervised training is met, training is stopped.

602: Train a fourth model based on the parameter of the first model and the labeled data, to obtain a parameter of the fourth model.

For example, the client updates the parameter of the fourth model based on the parameter of the first model. Then, the fourth model performs supervised training based on the labeled data.

In an optional implementation, after step 602, the method further includes the following step.

6021: When a stop condition of semi-supervised training on the client side is met, perform step 603.

6022: If the stop condition of semi-supervised training on the client side is not met, update the parameter of the first model based on the parameter of the fourth model, and repeatedly perform steps 601, 602, and 6022 until the stop condition of semi-supervised training on the client side is met.

The foregoing stop condition of semi-supervised training on the client side may be a quantity of times of repeatedly performing steps 601, 602, and 6022, or the like. This is not specifically limited in this solution.

603: Send a parameter of a first subnet and a parameter of a second subnet in the fourth model to a server.

The fourth model includes the first subnet and the second subnet.

In an optional implementation, a parameter other than the parameter of the first subnet and the parameter of the second subnet in the fourth model is sent to the server.

In another optional implementation, only the parameter of the first subnet and the parameter of the second subnet in the fourth model are sent to the server.

Compared with the conventional technology in which the client sends all parameters obtained through training to the server, in this solution, communication overheads in a training process can be reduced to some extent because a small amount of data is transmitted.

In an optional implementation, before step 603, the method further includes the following steps.

6031: If a preset condition is not met, update the first model based on the parameter of the first subnet from the server, update the fourth model based on the parameter of the first subnet and the parameter of the second subnet that are from the server, and repeatedly perform steps 601, 602, and 6031 until the preset condition is met.

6032: If the preset condition is met, perform step 603.

604: Update the fourth model based on the parameter of the first subnet and the parameter of the second subnet that are from the server. The updated fourth model includes the first subnet and the second subnet.

According to this embodiment of this application, the client performs unsupervised training on the first model based on the unlabeled data, performs supervised training on the fourth model based on the labeled data, and then sends the parameters of the first subnet and the second subnet of the fourth model to the server. Then, the client performs update based on the parameters of the first subnet and the second subnet from the server. This method ensures security of private data on the client, improves a feature extraction capability of the model on the unlabeled data, and saves labor costs. In this solution, horizontal federated learning can be performed even when the labeled data exists only on the server and no labeled data exists on the client, to adapt to a real scenario lack of the labeled data.

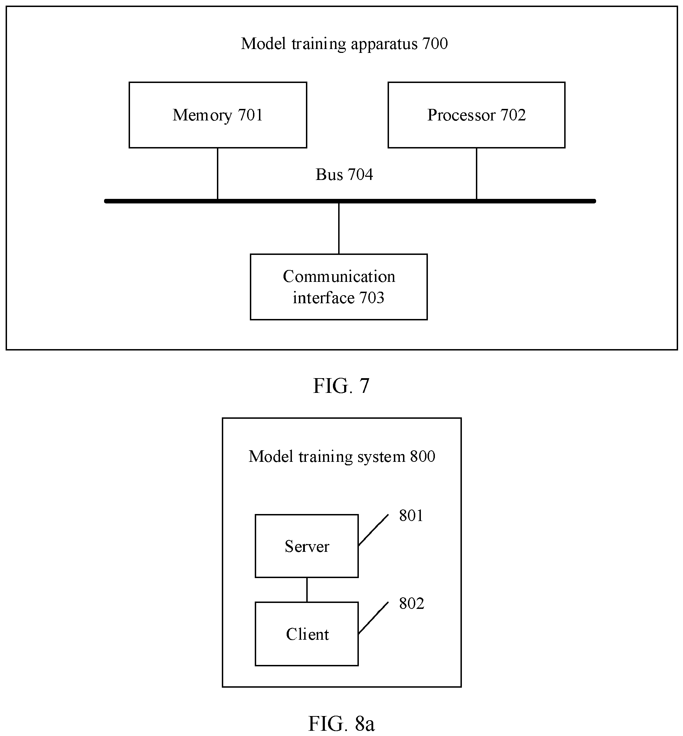

FIG. 7 is a schematic diagram of a hardware structure of a model training apparatus according to an embodiment of this application. A model training apparatus 700 (the apparatus 700 may be specifically a computer device) shown in FIG. 7 includes a memory 701, a processor 702, a communication interface 703, and a bus 704.

Communication connections between the memory 701, the processor 702, and the communication interface 703 are implemented through the bus 704.

The memory 701 may be a read-only memory (Read Only Memory, ROM), a static storage device, a dynamic storage device, or a random access memory (Random Access Memory, RAM).

The memory 701 may store a program. When the program stored in the memory 701 is executed by the processor 702, the processor 702 and the communication interface 703 are configured to perform steps of the model training method in embodiments of this application.

The processor 702 may be a general-purpose central processing unit (Central Processing Unit, CPU), a microprocessor, an application-specific integrated circuit (Application Specific Integrated Circuit, ASIC), a graphics processing unit (graphics processing unit, GPU), or one or more integrated circuits, and is configured to execute a related program, to implement functions that need to be performed by units in the model training apparatus in embodiments of this application, or perform the model training method in the method embodiments of this application.

The processor 702 may alternatively be an integrated circuit chip and has a signal processing capability. In an implementation process, steps of the model training method in this application may be completed by using an integrated logic circuit of hardware in the processor 702 or an instruction in a form of software. The processor 702 may alternatively be a general-purpose processor, a digital signal processor (Digital Signal Processing, DSP), an application-specific integrated circuit (ASIC), a field programmable gate array (Field Programmable Gate Array, FPGA) or another programmable logical device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 701. The processor 702 reads information in the memory 701, and completes, in combination with hardware of the processor 702, functions that need to be performed by units included in the model training apparatus in embodiments of this application, or performs the model training method in the method embodiments of this application.

The communication interface 703 is a transceiver apparatus, for example, but not limited to a transceiver, to implement communication between the apparatus 700 and another device or a communication network. For example, data may be obtained through the communication interface 703.

The bus 704 may include a path for transmitting information between the components (for example, the memory 701, the processor 702, and the communication interface 703) in the apparatus 700.

It should be noted that, although only the memory, the processor, and the communication interface are shown in the apparatus 700 shown in FIG. 7, in a specific implementation process, a person skilled in the art should understand that the apparatus 700 further includes another component necessary for implementing normal running. In addition, based on a specific requirement, a person skilled in the art should understand that the apparatus 700 may further include a hardware device for implementing another additional function. In addition, a person skilled in the art should understand that the apparatus 700 may include only components necessary for implementing this embodiment of this application, but not necessarily include all components shown in FIG. 7.

Consistent with the foregoing embodiment, in another aspect, an embodiment of this application further provides a model training system. As shown in FIG. 8a, the model training system 800 includes a server 801 and a client 802, the server 801 maintains labeled data, and the client 802 maintains unlabeled data. The client 802 is configured to train a first model based on the unlabeled data, to obtain a parameter of the first model; the client 802 is further configured to send a parameter of a first subnet in the first model to the server 801, where the first model further includes a second subnet; the server 801 is configured to train a second model based on the parameter of the first subnet reported by the client 802 and the labeled data, to update a parameter of the second model, where the second model includes the first subnet and a third subnet, and the third subnet corresponds to the second subnet; the server 801 is further configured to send an updated parameter of the first subnet and an updated parameter of the third subnet to the client 802; and the client 802 is further configured to obtain a target model based on the parameter of the first subnet and the parameter of the third subnet that are from the server 801, where the target model includes the first subnet and the third subnet.

In an optional implementation, when sending the parameter of the first model to the server 801, the client 802 is configured to send only the parameter of the first subnet in the first model to the server 801, and does not send a parameter other than the parameter of the first subnet in the first model to the server 801.

In another optional implementation, the client 802 is further configured to send a parameter other than the parameter of the first subnet in the first model to the server 801.

In an optional implementation, a quantity of clients 802 is K, K is an integer greater than 1, and the server 801 is further configured to perform aggregation processing on parameters of K first subnets from the K clients 802, to obtain a processed parameter of the first subnet; and when training the second model of the server based on the parameter of the first subnet reported by the client and the labeled data, to update the parameter of the second model, the server 801 is further configured to train the second model of the server 801 based on the processed parameter of the first subnet and the labeled data, to update the parameter of the second model.

In an optional implementation, the third subnet of the second model is configured to output a calculation result of the second model, and the second subnet of the first model is configured to output a calculation result of the first model. The third subnet of the second model has a different structure from the second subnet of the first model.

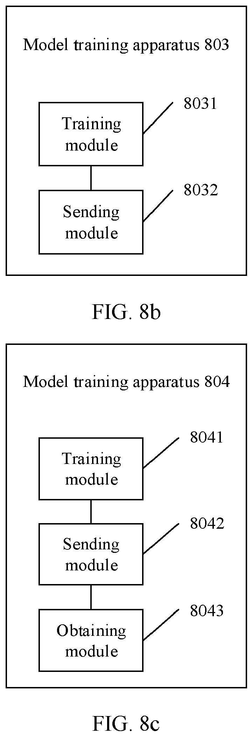

As shown in FIG. 8b, an embodiment of this application provides a model training apparatus. The apparatus 803 includes a training module 8031 and a sending module 8032.

The training module 8031 is configured to train a second model based on a parameter of a first subnet reported by a client and labeled data, to update a parameter of the second model. The second model includes the first subnet and a third subnet.

The sending module 8032 is configured to send an updated parameter of the first subnet and an updated parameter of the third subnet to the client.

In an optional implementation, a quantity of clients is K, and K is an integer greater than 1. The apparatus further includes a processing module, configured to: perform aggregation processing on parameters of K first subnets from the K clients, to obtain a processed parameter of the first subnet. The training module is further configured to: train the second model based on the processed parameter of the first subnet and the labeled data, to update the parameter of the second model.

In an optional implementation, the training module 8031 is further configured to: train a third model based on the parameter of the first subnet reported by the client and unlabeled data, to update a parameter of the third model; and train the second model based on the parameter of the third model and the labeled data, to update the parameter of the second model.

As shown in FIG. 8c, an embodiment of this application further provides a model training apparatus. The apparatus 804 includes a training module 8041, a sending module 8042, and an obtaining module 8043, which are specifically as follows:
The training module 8041 is configured to train a first model based on unlabeled data, to obtain a parameter of the first model;
the sending module 8042 is configured to send a parameter of a first subnet in the first model to a server, where the first model further includes a second subnet; and
the obtaining module 8043 is configured to obtain a target model based on the parameter of the first subnet and a parameter of a third subnet that are from the server, where the target model includes the first subnet and the third subnet, and the third subnet corresponds to the second subnet.

In an optional implementation, the sending module 8042 is further configured to send a parameter other than the parameter of the first subnet in the first model to the server.

In another optional implementation, the sending module 8042 is further configured to send only the parameter of the first subnet in the first model to the server, and does not send a parameter other than the parameter of the first subnet in the first model to the server.

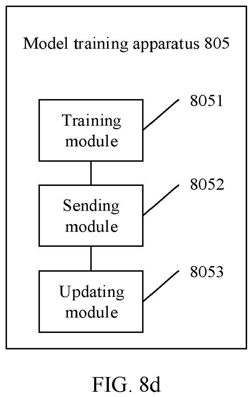

As shown in FIG. 8d, an embodiment of this application further provides a model training apparatus. The apparatus 805 includes:
a training module 8051, configured to train a first model based on unlabeled data, to obtain a parameter of the first model; and train a fourth model based on the parameter of the first model and labeled data, to obtain a parameter of the fourth model;
a sending module 8052, configured to send a parameter of a first subnet and a parameter of a second subnet in the fourth model to a server; and
an updating module 8053, configured to update the fourth model based on the parameter of the first subnet and the parameter of the second subnet that are from the server.

In an optional implementation, the sending module 8052 is further configured to send a parameter other than the parameter of the first subnet and the parameter of the second subnet in the fourth model to the server.

In another optional implementation, the sending module 8052 is further configured to send only the parameter of the first subnet and the parameter of the second subnet in the fourth model to the server, and does not send a parameter other than the parameter of the first subnet and the parameter of the second subnet in the fourth model to the server.

An embodiment of this application further provides a chip system. The chip system is applied to an electronic device. The chip system includes one or more interface circuits and one or more processors. The interface circuit and the processor are interconnected through a line. The interface circuit is configured to receive a signal from a memory of the electronic device, and send the signal to the processor. The signal includes computer instructions stored in the memory. When the processor executes the computer instructions, the electronic device performs the model training method.

An embodiment of this application further provides a model training apparatus, including a processor and a memory. The memory is configured to store program code, and the processor is configured to invoke the program code to perform the model training method.

An embodiment of this application further provides a computer-readable storage medium. The computer-readable storage medium stores instructions. When the instructions are run on a computer or a processor, the computer or the processor is enabled to perform one or more steps in any one of the foregoing methods.

An embodiment of this application further provides a computer program product including instructions. When the computer program product runs on a computer or a processor, the computer or the processor is enabled to perform one or more steps in any one of the foregoing methods.

A person skilled in the art may clearly understand that, for the purpose of convenient and brief description, for detailed working processes of the foregoing system, apparatus, and unit, refer to corresponding processes in the foregoing method embodiments. Details are not described herein again.

It should be understood that unless otherwise specified, "/" in descriptions of this application indicates an "or" relationship between associated objects. For example, A/B may indicate A or B. A and B may be singular or plural. In addition, in the descriptions of this application, "a plurality of" means two or more than two unless otherwise specified. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, the word such as "example" or "for example" is used to represent giving an example, an illustration, or a description. Any embodiment or design scheme described as "example" or "for example" in embodiments of this application should not be explained as being more preferred or having more advantages than another embodiment or design scheme. Exactly, use of the word such as "example" or "for example" is intended to present a relative concept in a specific manner for ease of understanding.

In the several embodiments provided in this application, it should be understood that the disclosed system, apparatus, and method may be implemented in other manners. For example, division into the units is merely logical function division and may be another division in actual implementation. For example, a plurality of units or components may be combined or integrated into another system, or some features may be ignored or not performed. The displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium, or transmitted by using the computer-readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a read-only memory (read-only memory, ROM), a random access memory (random access memory, RAM), or a magnetic medium, for example, a floppy disk, a hard disk, a magnetic tape, a magnetic disk, or an optical medium, for example, a digital versatile disc (digital versatile disc, DVD), or a semiconductor medium, for example, a solid state disk (solid state disk, SSD).

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A model training system, wherein the model training system comprises a server and a client, the server maintains labeled data, and the client maintains unlabeled data;
the client is configured to train a first model based on the unlabeled data, to obtain a parameter of the first model;
the client is further configured to send a parameter of a first subnet in the first model to the server, wherein the first model further comprises a second subnet;
the server is configured to train a second model based on the parameter of the first subnet reported by the client and the labeled data, to update a parameter of the second model, wherein the second model comprises the first subnet and a third subnet, and the third subnet corresponds to the second subnet;
the server is further configured to send an updated parameter of the first subnet and an updated parameter of the third subnet to the client; and
the client is further configured to obtain a target model based on the parameter of the first subnet and the parameter of the third subnet that are from the server, wherein the target model comprises the first subnet and the third subnet.

2. The system according to claim 1, wherein when sending the parameter of the first model to the server, the client is configured to send only the parameter of the first subnet in the first model to the server.

3. The system according to claim 1, wherein the client is further configured to send a parameter other than the parameter of the first subnet in the first model to the server.

4. The system according to any one of claims 1 to 3, wherein a quantity of clients is K, K is an integer greater than 1, and the server is further configured to perform aggregation processing on parameters of K first subnets from the K clients, to obtain a processed parameter of the first subnet; and
when training the second model of the server based on the parameter of the first subnet reported by the client and the labeled data, to update the parameter of the second model, the server is configured to train the second model of the server based on the processed parameter of the first subnet and the labeled data, to update the parameter of the second model.

5. The system according to any one of claims 1 to 4, wherein the third subnet of the second model is configured to output a calculation result of the second model, the second subnet of the first model is configured to output a calculation result of the first model, and the third subnet of the second model has a different structure from the second subnet of the first model.

6. A model training method, applied to a server, wherein the server maintains labeled data, and the method comprises:
training a second model based on a parameter of a first subnet reported by a client and the labeled data, to update a parameter of the second model, wherein the second model comprises the first subnet and a third subnet; and
sending an updated parameter of the first subnet and an updated parameter of the third subnet to the client.

7. The method according to claim 6, wherein a quantity of clients is K, K is an integer greater than 1, and the method further comprises:
performing aggregation processing on parameters of K first subnets from the K clients, to obtain a processed parameter of the first subnet; and
the training a second model based on a parameter of a first subnet reported by a client and the labeled data, to update a parameter of the second model comprises:
training the second model based on the processed parameter of the first subnet and the labeled data, to update the parameter of the second model.

8. The method according to claim 6 or 7, wherein the server further maintains unlabeled data, and the training a second model based on a parameter of a first subnet reported by a client and the labeled data, to update a parameter of the second model comprises:
training a third model based on the parameter of the first subnet reported by the client and the unlabeled data, to update a parameter of the third model; and
training the second model based on the parameter of the third model and the labeled data, to update the parameter of the second model.

9. A model training method, applied to a client, wherein the client maintains unlabeled data, and the method comprises:
training a first model based on the unlabeled data, to obtain a parameter of the first model;
sending a parameter of a first subnet in the first model to the server, wherein the first model further comprises a second subnet; and
obtaining a target model based on the parameter of the first subnet and a parameter of a third subnet that are from the server, wherein the target model comprises the first subnet and the third subnet, and the third subnet corresponds to the second subnet.

10. The method according to claim 9, wherein the client sends only the parameter of the first subnet in the first model to the server, and does not send a parameter other than the parameter of the first subnet in the first model to the server.

11. The method according to claim 9, wherein the method further comprises:
sending a parameter other than the parameter of the first subnet in the first model to the server.

12. A model training method, applied to a client, wherein the client maintains unlabeled data and labeled data, and the method comprises:
training a first model based on the unlabeled data, to obtain a parameter of the first model;
training a fourth model based on the parameter of the first model and the labeled data, to obtain a parameter of the fourth model;
sending a parameter of a first subnet and a parameter of a second subnet in the fourth model to the server; and
updating the fourth model based on the parameter of the first subnet and the parameter of the second subnet that are from the server.

13. The method according to claim 12, wherein only the parameter of the first subnet and the parameter of the second subnet in the fourth model are sent to the server, and a parameter other than the parameter of the first subnet and the parameter of the second subnet in the fourth model is not sent to the server.

14. The method according to claim 12, wherein the method further comprises:
sending a parameter other than the parameter of the first subnet and the parameter of the second subnet in the fourth model to the server.

15. A model training apparatus, wherein the apparatus comprises:
a training module, configured to train a second model based on a parameter of a first subnet reported by a client and the labeled data, to update a parameter of the second model, wherein the second model comprises the first subnet and a third subnet; and
a sending module, configured to send an updated parameter of the first subnet and an updated parameter of the third subnet to the client.

16. The apparatus according to claim 15, wherein a quantity of clients is K, K is an integer greater than 1, and the apparatus further comprises a processing module, configured to:
perform aggregation processing on parameters of K first subnets from the K clients, to obtain a processed parameter of the first subnet; and
the training module is further configured to:
train the second model based on the processed parameter of the first subnet and the labeled data, to update the parameter of the second model.

17. The apparatus according to claim 15 or 16, wherein the training module is further configured to:
train a third model based on the parameter of the first subnet reported by the client and the unlabeled data, to update a parameter of the third model; and
train the second model based on the parameter of the third model and the labeled data, to update the parameter of the second model.

18. A model training apparatus, wherein the apparatus comprises:
a training module, configured to train a first model based on the unlabeled data, to obtain a parameter of the first model;
a sending module, configured to send a parameter of a first subnet in the first model to the server, wherein the first model further comprises a second subnet; and
an updating module, configured to obtain a target model based on the parameter of the first subnet and a parameter of a third subnet that are from the server, wherein the target model comprises the first subnet and the third subnet, and the third subnet corresponds to the second subnet.

19. The apparatus according to claim 18, wherein the sending module is configured to:
send only the parameter of the first subnet in the first model to the server, and does not send a parameter other than the parameter of the first subnet in the first model to the server.

20. The apparatus according to claim 18, wherein the sending module is further configured to:
send a parameter other than the parameter of the first subnet in the first model to the server.

21. A model training apparatus, wherein the apparatus comprises:
a training module, configured to train a first model based on the unlabeled data, to obtain a parameter of the first model; and train a fourth model based on the parameter of the first model and the labeled data, to obtain a parameter of the fourth model;
a sending module, configured to send a parameter of a first subnet and a parameter of a second subnet in the fourth model to the server; and
an updating module, configured to update the fourth model based on the parameter of the first subnet and the parameter of the second subnet that are from the server.

22. The apparatus according to claim 21, wherein the sending module is configured to:
send only the parameter of the first subnet and the parameter of the second subnet in the fourth model to the server, and does not send a parameter other than the parameter of the first subnet and the parameter of the second subnet in the fourth model to the server.

23. The apparatus according to claim 21, wherein the sending module is further configured to:
send a parameter other than the parameter of the first subnet and the parameter of the second subnet in the fourth model to the server.

24. A model training apparatus, comprising a processor and a memory, wherein the memory is configured to store program code, and the processor is configured to invoke the program code to perform the method according to any one of claims 6 to 8, and/or the method according to any one of claims 9 to 11, and/or the method according to any one of claims 12 to 14.

25. A computer-readable storage medium, wherein the computer-readable storage medium stores a computer program, and the computer program is executed by a processor to implement the method according to any one of claims 6 to 8, and/or the method according to any one of claims 9 to 11, and/or the method according to any one of 12 to 14.

26. A computer program product, wherein when the computer program product runs on a computer, the computer is enabled to perform the method according to any one of claims 6 to 8, and/or the method according to any one of claims 9 to 11, and/or the method according to any one of claims 12 to 14.
